# EUROPEAN PATENT APPLICATION

(11) **EP 4 794 393 A1**
(43) Date of publication of application: **19.08.2026**
(21) Application number: 24884581.0
(22) Date of filing: 24.10.2024
(51) Int. Cl.: H04W 36/14

(54) **COMMUNICATION METHOD AND APPARATUS**

(30) Priority: 30.10.2023 CN 202311429899
(71) Applicant: HUAWEI TECHNOLOGIES CO., LTD., Shenzhen, Guangdong 518129 (CN)
(72) Inventor: PENG, Wenjie, Shenzhen, Guangdong 518129 (CN); XU, Yishan, Shenzhen, Guangdong 518129 (CN); XU, Shengfeng, Shenzhen, Guangdong 518129 (CN)
(74) Representative: Grünecker Patent- und Rechtsanwälte PartG mbB
(86) International application number: PCT/CN2024/127173
(87) International publication number: WO 2025/092577

(57) **Abstract**

A communication method and apparatus are used for ensuring that, during movement of a terminal device, two base stations after the movement of the terminal device complete data dual-flow communication with a core network. A first network device obtains information about a second network device and a first policy, and determines, based on the information about the second network device and the first policy, whether a third network device exists. The first network device and the second network device provide a data communication service for the terminal device, and the third network device is a target network device to which the terminal device can be handed over from the first network device. In this way, the first network device senses information about another network device and the first policy, so that the first network device can select an appropriate target network device during handover decision-making, to ensure that the network device after the handover meets a core network data dual-flow communication requirement.

## Description

### CROSS-REFERENCE TO RELATED APPLICATIONS

This application claims priority to Chinese Patent Application No. 202311429899.4, filed with the China National Intellectual Property Administration on October 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a dual connectivity scenario, a terminal device is allowed to be concurrently connected to two base stations. The two base stations provide services for the terminal device, so that a rate and reliability of the terminal device can be effectively improved. Generally, a dual connectivity mechanism requires an interface between base stations, to enable the base stations to perform necessary negotiation to complete terminal device configuration, or enable the base stations to perform data dual-flow communication. However, in some specific scenarios, there may be no interface between base stations, or capabilities of the base station do not support dual connectivity. In this case, to improve a rate of the terminal device, there is a candidate solution: For a data link, the terminal device may separately perform data communication with a core network via two base stations, and the terminal device establishes control plane connections to the core network via the two base stations respectively. The specific scenario may be referred to as a core network dual-flow communication scenario, or may be referred to as a core network splitting scenario.

During movement of the terminal device, when there is an interface between base stations, negotiation between the base stations may ensure that the base stations after the movement of the terminal device can both serve the terminal device. However, in a core network dual-flow communication scenario in which there is no interface between base stations, because the two base stations are independent in terms of a connection to the terminal device, negotiation cannot be performed between the base stations. As a result, the two base stations may fail to meet a core network dual-flow communication requirement after the terminal device moves. In view of this, a method is urgently needed to ensure that, during movement of a terminal device, two base stations after the movement of the terminal device can complete data dual-flow communication with a core network.

### SUMMARY

Embodiments of this application provide a communication method and apparatus, to ensure that, during movement of a terminal device, two base stations after the movement of the terminal device can complete data dual-flow communication with a core network.

According to a first aspect, this application provides a communication method. The method may be applied to a first network device, a component (such as a processor, a chip, a chip system, a circuit, or another component) configured in the first network device, or a software module. An example in which the method is applied to the first network device is used for description. The method may include: The first network device obtains information about a second network device and a first policy, and determines, based on the information about the second network device and the first policy, whether a third network device exists. The first network device and the second network device provide a data communication service for a terminal device, and the third network device is a target network device to which the terminal device can be handed over from the first network device.

According to the foregoing method, the first network device senses information about another network device and the first policy, so that the first network device can select an appropriate target network device during handover decision, to ensure that the network device after the handover meets a core network data dual-flow communication requirement.

In a possible design, the first network device may obtain the information about the second network device and the first policy by using the following method. The first network device obtains the information about the second network device and the first policy from a first core network device. Alternatively, the first network device obtains the information about the second network device from the terminal device, and obtains the first policy from the first core network device. Alternatively, the first network device obtains the information about the second network device and the first policy from the terminal device. In this way, the first network device can accurately and flexibly obtain the information about the second network device and the first policy, so that an appropriate target network device is subsequently selected.

In a possible design, the first network device may send a first measurement configuration to the terminal device based on the information about the second network device and the first policy. Further, the first network device receives a measurement result from the terminal device, where the measurement result meets the first policy. In this way, the terminal device can report the measurement result that meets the first policy, and the first network device makes a handover decision based on the measurement result.

In a possible design, the first network device sends a second measurement configuration to the terminal device, and the first network device receives a measurement result from the terminal device, where the measurement result meets the first policy, and the measurement result is determined by the terminal device based on the information about the second network device and the first policy. In this way, the first network device can obtain a measurement result that meets the first policy, and then make a handover decision based on the measurement result.

In a possible design, a method in which the first network device determines, based on the information about the second network device and the first policy, whether the third network device exists may be as follows: The first network device determines, based on the information about the second network device, the first policy, and the measurement result, whether the third network device exists. In this way, the first network device can accurately determine whether the third network device exists.

In a possible design, a method in which the first network device determines, based on the information about the second network device, the first policy, and the measurement result, whether the third network device exists may be as follows: The first network device determines, based on the information about the second network device, whether the measurement result includes a measurement result of a network device that is different from the second network device and that meets the first policy with the second network device; and if the measurement result includes the measurement result of the network device, the first network device determines that the third network device exists; or if the measurement result does not include the measurement result of the network device, the first network device determines that the third network device does not exist. In this way, the first network device can accurately determine whether the third network device exists.

In a possible design, when determining that the third network device exists, the first network device determines, as the third network device, one network device in the corresponding network devices which is different from the second network device and meets the first policy with the second network device and whose measurement result is in the measurement result. In this way, the first network device may subsequently hand over to the third network device that meets a dual-flow communication requirement, to ensure that two network devices after the movement of the terminal device complete data dual-flow communication with the core network.

In a possible design, when the first network device determines that the third network device does not exist, when determining that quality of a serving cell of the first network device is less than a first threshold, the first network device releases a connection between the first network device and the terminal device, or suspends data communication of the terminal device; or the first network device determines that the terminal device can handed over to a fourth network device, and the first network device stops or suspends data communication of the terminal device. In this way, when the target network device that meets the dual-flow communication requirement cannot be found, data dual-flow communication is not performed.

In a possible design, the first policy may include at least one of the following: two network devices that provide a data communication service for the terminal device being different, a combination of networks to which network devices allowed to perform a dual-flow communication belong, a combination of radio access technologies RATs of network devices allowed to perform a dual-flow communication operation, or a combination of operating frequency bands or frequencies of network devices allowed to perform a dual-flow communication operation.

In a possible design, the information about the second network device may include at least one of the following: an identifier of the second network device, a network to which the second network device belongs, a radio access technology RAT of the second network device, or serving frequency band information or frequency information of the second network device.

According to a second aspect, this application provides a communication method. The method may be applied to a first network device, a component (such as a processor, a chip, a chip system, a circuit, or another component) configured in the first network device, or a software module. An example in which the method is applied to a first network device is used for description. The method may include: After determining at least one candidate network device, the first network device sends a first request message to a first core network device, where the first request message is for requesting the first core network device to determine whether the at least one candidate network device can be used as a target network device to which a terminal device can handed over from the first network device. The first network device and a second network device can provide a data communication service for the terminal device, and the target network device and the second network device can provide a data communication service for the terminal device. Then, the first network device receives a first response message from the first core network device, where the first response message indicates whether the at least one candidate network device can be used as the target network device to which the terminal device can handed over from the first network device.

Based on the foregoing communication method, the first network device queries a core network in advance to select a target cell or a target network device that meets the first policy, to ensure that the terminal device can maintain service dual-flow communication during movement.

In a possible design, the first network device may determine the at least one candidate network device by using the following method. The first network device sends a measurement configuration to the terminal device, and receives a measurement result from the terminal device. In addition, the first network device determines the at least one candidate network device based on the measurement result. In this way, the first network device can accurately determine the at least one candidate network device.

In a possible design, the measurement result may be determined based on information about the first network device, the information about the second network device, and the first policy. In this way, a measurement result that meets the policy can be obtained, to improve a success rate of the first network device in finding the target terminal device that meets the policy.

In a possible design, the first policy may include at least one of the following: two network devices that provide a data communication service for the terminal device being different, a combination of networks to which network devices allowed to perform a dual-flow communication belong, a combination of radio access technologies RATs of network devices allowed to perform a dual-flow communication operation, or a combination of operating frequency bands or frequencies of network devices allowed to perform a dual-flow communication.

In a possible design, the first request message includes information about the at least one candidate network device. The first response message includes information about a candidate network device that can be used as the target network device in the at least one candidate network device. Alternatively, the first response message includes indication information indicating whether the at least one candidate network device can be used as the target network device. In this way, it can be determined whether the at least one candidate network device can be used as the target network device.

In a possible design, the first request message includes information about a first candidate network device, the first response message includes indication information indicating whether the first candidate network device can be used as the target network device, and the first candidate network device is any one of the at least one candidate network device. In this way, it can be determined whether the at least one candidate network device can be used as the target network device.

In a possible design, when none of the at least one candidate network device can be used as the target network device to which the terminal device can handed over from the first network device, when determining that quality of a serving cell of the first network device is less than a first threshold, the first network device may release a connection between the first network device and the terminal device, or suspend data communication of the terminal device; or the first network device determines that the terminal device is capable of being handed over to a third network device, and the first network device stops or suspends data communication of the terminal device. In this way, when the target network device that meets the dual-flow communication requirement cannot be found, data dual-flow communication is not performed.

According to a third aspect, this application provides a communication method. The method may be applied to a first core network device, a component (such as a processor, a chip, a chip system, a circuit, or another component) configured in the first core network device, or a software module. An example in which the method is applied to the first core network device is used for description. The method may include: The first core network device receives a first request message from a first network device, where the first request message is for requesting the first core network device to determine whether at least one candidate network device can be used as a target network device to which a terminal device can be handed over from the first network device. The first network device and a second network device provide a data communication service for the terminal device, and the target network device and the second network device can provide a data communication service for the terminal device. The first core network device determines, based on a first policy, whether the at least one candidate network device can be used as the target network device to which the terminal device can be handed over from the first network device; and finally the first core network device sends a first response message to the first network device, where the first response message indicates whether the at least one candidate network device can be used as the target network device to which the terminal device can be handed over from the first network device.

Based on the foregoing communication method, the first network device queries a core network in advance to select a target cell or a target network device that meets the first policy, to ensure that the terminal device can maintain service dual-flow communication during movement.

In a possible design, the first policy may include at least one of the following: two network devices that provide a data communication service for the terminal device being different, a combination of networks to which network devices allowed to perform a dual-flow communication belong, a combination of radio access technologies RATs of network devices allowed to perform a dual-flow communication, or a combination of operating frequency bands or frequencies of network devices allowed to perform a dual-flow communication.

In a possible design, the first request message includes information about the at least one candidate network device. The first response message includes information about a candidate network device that can be used as the target network device in the at least one candidate network device. Alternatively, the first response message includes indication information indicating whether the at least one candidate network device can be used as the target network device. In this way, it can be determined whether the at least one candidate network device can be used as the target network device.

In a possible design, the first request message may include information about a first candidate network device, the first response message includes indication information indicating whether the first candidate network device can be used as the target network device, and the first candidate network device is any one of the at least one candidate network device. In this way, it can be determined whether the at least one candidate network device can be used as the target network device.

According to a fourth aspect, this application provides a communication method. The method may be applied to a terminal device, a component (such as a processor, a chip, a chip system, a circuit, or another component) configured in the terminal device, or a software module. An example in which the method is applied to the terminal device is used for description. The method may include: The terminal device maintains a first cell of a first network device as a serving cell, and determines a second cell of a second network device as a serving cell, where the first network device and the second network device can provide a data communication service for the terminal device, and the first network device and the second network device meet a first policy.

Based on the foregoing communication method, the terminal device may select a second cell that meets a dual-flow communication requirement, to ensure that a service data dual-flow communication requirement is met.

In a possible design, a method in which the terminal device maintains the first cell of the first network device as the serving cell may be as follows: The terminal device camps on the first cell; or the terminal device communicates with the first cell.

In a possible design, before determining the second cell of the second network device as the serving cell, the terminal device determines that a service dual-flow communication requirement exists; or the terminal device receives a first message from a first core network device, where the first message indicates the terminal device to determine the second cell of the second network device as the serving cell; or the terminal device receives a second message from the first network device, where the second message indicates the terminal device to perform service dual-flow communication. In this way, the terminal device may be triggered to select the second cell to implement service data dual-flow communication.

In a possible design, the first message is a paging message or a service establishment message.

In a possible design, when moving, the terminal device determines a third cell of a third network device as a serving cell. The third cell is a cell reselected for the second cell. The first network device and the third network device can provide a data communication service for the terminal device, and the first network device and the third network device meet the first policy. In this way, when the terminal device moves, cell reselection is performed, to meet a service data dual-flow communication requirement.

In a possible design, a method in which the terminal device determines the third cell of the third network device as the serving cell may be as follows: The terminal device determines, in cells of at least one network device that meets the first policy with the first network device, that the third cell of the third network device is a cell with highest cell quality; or the terminal device determines, in cells whose cell quality meets a condition, that the third cell of the third network device is a cell that has highest cell quality in the cells that meet the condition and that belongs to a network device that meets the first policy with the first network device. In this way, the third cell that meets a requirement can be accurately determined.

In a possible design, the first policy may include at least one of the following: two network devices that provide a data communication service for the terminal device being different, a combination of networks to which network devices allowed to perform a dual-flow communication belong, a combination of radio access technologies RATs of network devices allowed to perform a dual-flow communication, or a combination of operating frequency bands or frequencies of network devices allowed to perform a dual-flow communication.

According to a fifth aspect, this application further provides a communication apparatus. The communication apparatus may be used in a first network device. The communication apparatus has a function of implementing the method according to any one of the first aspect or the possible design examples of the first aspect, or any one of the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the first aspect or the possible design examples of the first aspect, or in the second aspect or the possible design examples of the second aspect. Details are not described herein again.

In a possible design, a structure of the communication apparatus includes a processor, and optionally further includes a memory and/or a transceiver. The transceiver is configured to send and receive a signal, data, a message, information, or the like, and is configured to communicate and interact with another device in a communication system. The processor is configured to support the communication apparatus in performing a corresponding function in the first aspect or the possible design examples of the first aspect, or in the second aspect or the possible design examples of the second aspect. The memory is coupled to the processor, and stores program instructions and data necessary for the communication apparatus.

According to a sixth aspect, this application further provides a communication apparatus. The communication apparatus may be used in a first core network device, and the communication apparatus has a function of implementing the method according to any one of the third aspect or the possible design examples of the third aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the third aspect or the possible design examples of the third aspect. Details are not described herein again.

In a possible design, a structure of the communication apparatus includes a processor, and optionally further includes a memory and/or a transceiver. The transceiver is configured to send and receive a signal, data, a message, information, or the like, and is configured to communicate and interact with another device in a communication system. The processor is configured to support the communication apparatus in performing a corresponding function in the third aspect or the possible design examples of the third aspect. The memory is coupled to the processor, and stores program instructions and data necessary for the communication apparatus.

According to a seventh aspect, this application further provides a communication apparatus. The communication apparatus may be used in a terminal device, and the communication apparatus has a function of implementing the method according to any one of the fourth aspect or the possible design examples of the fourth aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the fourth aspect or the possible design examples of the fourth aspect. Details are not described herein again.

In a possible design, a structure of the communication apparatus includes a processor, and optionally further includes a memory and/or a transceiver. The transceiver is configured to send and receive a signal, data, a message, information, or the like, and is configured to communicate and interact with another device in a communication system. The processor is configured to support the communication apparatus in performing a corresponding function in the fourth aspect or the possible design examples of the fourth aspect. The memory is coupled to the processor, and stores program instructions and data necessary for the communication apparatus.

According to an eighth aspect, an embodiment of this application provides a communication system. The communication system may include a terminal device, a first network device, a second network device, and the like. The first network device is configured to implement the method according to any one of the first aspect or the possible design examples of the first aspect.

According to a ninth aspect, an embodiment of this application provides a communication system. The communication system may include a terminal device, a first network device, a second network device, a first core network device, and the like. The first network device is configured to implement the method according to any one of the second aspect or the possible design examples of the second aspect. The first core network device is configured to implement the method according to any one of the third aspect or the possible design examples of the third aspect.

According to a tenth aspect, an embodiment of this application provides a communication system. The communication system may include a terminal device, a first network device, a second network device, and the like. The terminal device is configured to implement the method according to any one of the fourth aspect or the possible design examples of the fourth aspect.

According to an eleventh aspect, an embodiment of this application provides a computer-readable storage medium. The computer-readable storage medium stores program instructions, and when the program instructions are run on a computer, the computer is caused to perform the method according to any one of the first aspect and the possible designs of the first aspect, or any one of the second aspect and the possible designs of the second aspect, or any one of the third aspect and the possible designs of the third aspect, or any one of the fourth aspect and the possible designs of the fourth aspect in embodiments of this application. For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a twelfth aspect, an embodiment of this application provides a computer program product, including instructions. When the instructions are run on a computer, the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect is performed.

According to a thirteenth aspect, this application further provides a chip, including a processor. The processor is coupled to a memory, and is configured to read and execute program instructions stored in the memory, to cause the chip to implement the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

For each of the fifth aspect to the thirteenth aspect and technical effects that may be achieved in each aspect, refer to descriptions of technical effects that may be achieved in any one of the first aspect or the possible solutions of the first aspect, or any one of the second aspect or the possible solutions of the second aspect, or any one of the third aspect or the possible solutions of the third aspect, or any one of the fourth aspect or the possible solutions of the fourth aspect.

### BRIEF DESCRIPTION OF DRAWINGS

FIG. 1a and FIG. 1b are diagrams of architectures of communication systems according to an embodiment of this application;
FIG. 2a and FIG. 2b are diagrams of core network service data dual-flow communication according to an embodiment of this application;
FIG. 3a and FIG. 3b are diagrams of data network dual-flow communication according to an embodiment of this application;
FIG. 4 is a flowchart of a communication method according to an embodiment of this application;
FIG. 5 is a flowchart of an example of a communication method according to an embodiment of this application;
FIG. 6 is a flowchart of another communication method according to an embodiment of this application;
FIG. 7 is a flowchart of another communication method according to an embodiment of this application;
FIG. 8 is a diagram of cell reselection according to this application;
FIG. 9 is a diagram of a structure of a communication apparatus according to this application; and
FIG. 10 is a diagram of a structure of a communication apparatus according to this application.

### DESCRIPTION OF EMBODIMENTS

The following further describes in detail this application with reference to accompanying drawings.

Embodiments of this application provide a communication method and apparatus, to ensure that, during movement of a terminal device, two base stations after the movement of the terminal device can complete data dual-flow communication with a core network. The method and the apparatus in this application are based on a same technical concept. Because problem-resolving principles of the method and the apparatus are similar, mutual reference may be made to implementation of the apparatus and the method, and repeated parts are not described.

In the description of this application, words such as "first" and "second" are merely used for distinguishing between descriptions, and cannot be understood as an indication or implication of relative importance, or cannot be understood as an indication of implication of an order.

In the description of this application, "at least one (type)" means one or more (types), and "a plurality of (types)" means two or more (types). "At least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural.

In the description of this application, "and/or" describes an association relationship between associated objects, and represents that three relationships may exist. For example, A and/or B may represent the following cases: Only A exists, both A and B exist, and only B exists, where A and B may be singular or plural. "/" indicates "or". For example, a/b indicates a or b.

To describe the technical solutions in embodiments of this application more clearly, the following describes a communication method and apparatus provided in embodiments of this application in detail with reference to the accompanying drawings.

The communication method provided in embodiments of this application may be applied to a core network data dual-flow communication architecture. For example, a terminal device may be concurrently connected to two network devices, and obtain a service data communication service via the two network devices.

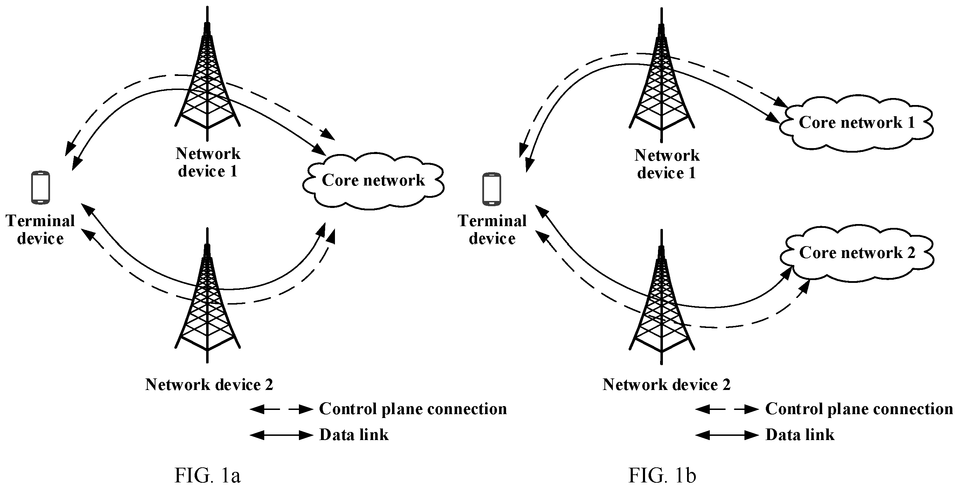

For example, FIG. 1a and FIG. 1b show architectures of communication systems to which the communication method provided in embodiments of this application is applicable. The architecture of the communication system may include a terminal device, a network device, a core network, and the like. As shown in FIG. 1a, two network devices (shown as a network device 1 and a network device 2) that are concurrently connected to the terminal device may be connected to a same core network. As shown in FIG. 1b, two network devices (shown as a network device 1 and a network device 2) that are concurrently connected to the terminal device may be connected to different core networks. As shown in FIG. 1b, the network device 1 may be connected to a core network 1, and the network device 2 may be connected to a core network 2.

The terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device having a wireless connection function and a vehicle-mounted device. Currently, the terminal device may be: a cellular phone (cellular phone), a smartphone (smartphone), a wireless data card, a personal digital assistant (personal digital assistant, PDA) computer, a mobile phone (mobile phone), a tablet computer, a notebook computer, a palmtop computer, a wireless modem (modem), a laptop computer (laptop computer), a mobile internet device (mobile internet device, MID), a wearable device, a virtual reality (virtual reality, VR) device, an augmented reality (augmented reality, AR) device, an extended reality (extended reality, XR) device, a mixed reality (mixed reality, MR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device may alternatively be a D2D terminal device, a V2X communication terminal device, an intelligent vehicle, a vehicle-mounted system (or referred to as an internet of vehicles system) (telematics box, TBOX), a machine-to-machine/machine-type communications (machine-to-machine/machine-type communications, M2M/MTC) terminal device, or an internet of things (internet of things, IoT) terminal device. For example, the terminal device may be a carrier such as a vehicle, a ship, or aircraft, a terminal-type roadside unit, or a communication module or chip built in the vehicle or roadside unit. For example, the terminal device may be a vehicle-mounted module. If the various terminal devices described above are in a vehicle, for example, placed in the vehicle or mounted in the vehicle, the terminal devices may all be considered as vehicle-mounted terminal devices. For example, the vehicle-mounted terminal devices are also referred to as on-board units (on-board units, OBUs).

By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or a part of functions without depending on a smartphone, for example, smart watches or smart glasses, and includes a device that is dedicated to only one type of application function and that needs to collaboratively work with another device such as a smartphone, for example, various smart bands, smart helmets, or smart jewelry for monitoring physical signs.

Alternatively, the terminal device may be an intelligent device such as an amusement device or a smart appliance, or an uncrewed aerial vehicle.

In this application, the terminal device may alternatively be a functional module, a chip, or a chip system. Optionally, the functional module, the chip, or the chip system may be disposed in the terminal device.

A network device is a device that provides access for a terminal device. The network device may include a radio access network (radio access network, RAN) device, for example, a base station. The network device may be a base station (base station), an evolved NodeB (evolved NodeB) (which may be referred to as an eNB or an e-NodeB for short) in a long term evolution (long term evolution, LTE) system or a long term evolution-advanced (long term evolution-advanced, LTE-A) system, a communication reception point (communication reception point, TRP), a next generation base station (next generation NodeB, gNB) or a new radio (new radio, NR) base station in a 5th generation (5th generation, 5G) mobile communication system, a next generation base station in a 6th generation (6th generation, 6G) mobile communication system, a base station in a future mobile communication system, an access node in a wireless local area network (wireless fidelity, Wi-Fi) system, or the like. The network device may alternatively be an access network device in an open access network (open RAN, ORAN) system, or the like. Optionally, the network device may alternatively be a module or unit that can implement a part of functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU completes functions of a radio resource control protocol and a packet data convergence protocol (packet data convergence protocol, PDCP) of a base station, and may further complete functions of a service data adaptation protocol (service data adaptation protocol, SDAP). The DU completes functions of a radio link control layer and a medium access control (medium access control, MAC) layer of a base station, and may further complete some or all functions of a physical layer. In different systems, the CU (or the CU-CP and the CU-UP), the DU, or the RU may also have different names, but a person skilled in the art may understand meanings of the names. For example, in an ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU.

For example, the radio access network device may be a macro base station, may be a micro base station (also referred to as a small cell) or an indoor base station, or may be a relay node, a donor node, or the like. The network device may alternatively be a terrestrial base station, a satellite (base station), or the like. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a radio remote unit (remote radio unit, RRU), a wireless fidelity (wireless fidelity, Wi-Fi) access point (access point, AP), a baseband pool (BBU pool) and an RRU in a cloud radio access network (cloud radio access network, CRAN), or the like. A specific technology and a specific device form that are used by the network device are not limited in embodiments of this application. For example, the network device may correspond to an eNB in a 4G system, and correspond to a gNB in a 5G system.

In this application, the network device may alternatively be a central processing element (central processing element, CPE), a router, or the like.

In this application, the network device may alternatively be a functional module, a chip, or a chip system. Optionally, the functional module, the chip, or the chip system may be disposed in the network device.

A core network may include a control plane function network element, a user plane function network element, and the like. The control plane network element is responsible for access and mobility management of a terminal device, and the user plane network element is responsible for service data communication of the terminal device.

The user plane function network element may be responsible for forwarding and receiving user data in the terminal device. The user plane function network element may receive user data from a data network, and transmit the user data to the terminal device via a network device. The user plane function network element may further receive the user data from the terminal device via the network device, and forward the user data to the data network. Communication resources and scheduling functions that are used by the user plane function network element to provide services for the terminal device are managed and controlled by a session management function network element (session management function, SMF) network element in the core network. For example, in 5G, the user plane function network element may be a user plane function (user plane function, UPF) network element. In future communication, for example, in 6G, the user plane function network element may still be a UPF network element or have another name. This is not limited in this application.

It should be understood that the core network may further include a plurality of other network elements. Details are not described herein in this application.

In some implementations, the two network devices connected to the terminal device may both be NR base stations; or one of the two network devices may be an NR base station, and the other network device may be an LTE base station. An air interface standard is not limited. In addition, a base station type is not limited in this application. For example, two base stations may both be ground base stations; or two base stations may both be satellites; or one of the two base stations is a ground base station, and the other base station is a satellite.

It should be understood that the communication systems shown in FIG. 1a and FIG. 1b may further include another device. This is not limited in this application. Quantities of devices shown in FIG. 1a and FIG. 1b are merely examples. For example, data communication between the terminal device and the core network may be concurrently performed via a plurality of network devices. This is not limited in this application.

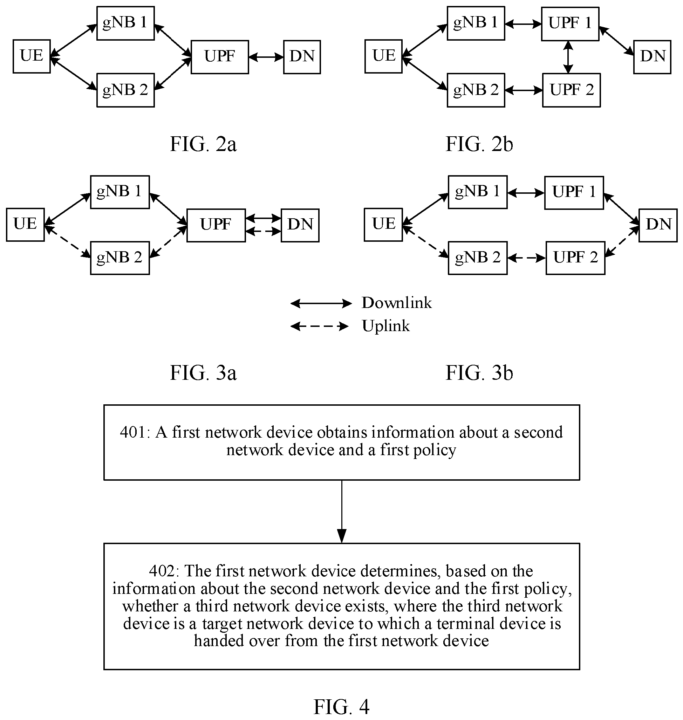

In embodiments of this application, core network data dual-flow communication may be understood as performing dual-flow communication on service data in a core network. For example, in a scenario in which there is one core network shown in FIG. 1a, a UPF in the core network may distribute service data to two network devices (for example, a gNB 1 and a gNB 2) for communication, as shown in FIG. 2a. Alternatively, in a scenario in which there are two core networks shown in FIG. 1b, a UPF 1 in the core network 1 may distribute service data to a UPF 2 in the core network 2, and then the two core networks respectively distribute service data to respective network devices (for example, a gNB 1 and a gNB 2) for communication, as shown in FIG. 2b.

Further, the core network data dual-flow communication may also be included in a data network (data network, DN) dual-flow communication scenario, to be specific, a data link between a DN and a UPF of a core network is split into two data links. In this case, the DN performs dual-flow communication (downlink) and aggregation (uplink) of the data. The data network may also be understood as an application server. This is not limited in this application. For example, FIG. 3a is a diagram of data network dual-flow communication in a scenario shown in FIG. 1a in which there is one core network, and FIG. 3b is a diagram of data network dual-flow communication in a scenario shown in FIG. 1a in which there are two core networks.

It should be understood that the core network data dual-flow communication and the data network/server data dual-flow communication are not distinguished in this application. For ease of description, only the core network data dual-flow communication is used as an example for description in the following.

In a core network data dual-flow communication architecture, if the two base stations are independent in terms of a connection to the terminal device, signaling negotiation between the network devices for the terminal device is not supported. Therefore, in the core network data dual-flow communication architecture, two serving network devices of the terminal device are separately responsible for mobility of the terminal device, in other words, each of the two serving network devices selects a target network device based on an implementation algorithm of the serving network device. As a result, core network data dual-flow communication may not be performed between selected target network devices, or between a selected target network device and the other current serving network device. In view of this, embodiments of this application provide a communication method, to ensure that, during movement of a terminal device, two appropriate serving network devices can be found for the terminal device, thereby enabling the terminal device to perform service dual-flow communication with a core network via the two serving network devices after the movement.

In embodiments of this application, an operation performed by a terminal device, a network device, or a core network device may alternatively be performed by a processor, a chip, a chip system, a functional module, or the like in the terminal device, the network device, or the core network device. This is not limited in this application. For example, the following operation performed by a first network device may alternatively be performed by a processor, a chip, a functional module, or the like in the first network device.

Based on the foregoing descriptions, an embodiment of this application provides a communication method. As shown in FIG. 4, a procedure of the method may include the following steps.

Step 401: The first network device obtains information about a second network device and a first policy, where the first network device and the second network device provide a data communication service for a terminal device.

In some embodiments, the terminal device establishes an RRC connection to each of the first network device and the second network device, and performs service data communication with a data network or an application server via the first network device and the second network device.

Optionally, the terminal device establishes non-access stratum (nun-access stratum, NAS) connections to the core network via the first network device and the second network device respectively. For example, a 5G network is used as an example, and the NAS connection may be understood as a logical connection between the terminal device and an AMF.

Optionally, in this embodiment, the first network device and the second network device may sense that the terminal device is currently in a core network service data dual-flow communication mode.

The first policy may be configured for determining two network devices that concurrently provide a data communication service for the terminal device. It may also be understood as that the first policy may be configured for determining two network devices that can implement data service dual-flow communication for the terminal device.

For example, the first policy may include at least one of the following: two network devices that provide a data communication service for the terminal device being different, a combination of networks to which network devices allowed to perform a dual-flow communication belong, a combination of radio access technologies (radio access technologies, RATs) of network devices allowed to perform a dual-flow communication, or a combination of operating frequency bands or frequencies of network devices allowed to perform a dual-flow communication.

For example, the combination of networks to which network devices allowed to perform a dual-flow communication belong may be two network devices that are allowed to perform a dual-flow communication and that belong to a same public land mobile network (public land mobile network, PLMN), a preset PLMN pair, or a combination of a PLMN and a non-public network (non-public network, NPN).

The combination of RATs of network devices allowed to perform a dual-flow communication may also be understood as a combination of types of network devices allowed to perform a dual-flow communication. For example, the two network devices that are allowed to perform a dual-flow communication operation may both be NR base stations, may respectively be an LTE base station and an NR base station, may both be ground base stations, may both be satellite base stations, or may respectively be a ground base station and a satellite base station.

Optionally, the first policy may include one of the foregoing listed items, or may include a plurality of items listed in descending order of priorities.

In an optional implementation, the first network device may obtain the information about the second network device and the first policy by using the following three methods.

Method a1: The first network device obtains the information about the second network device and the first policy from a first core network device.

Method a2: The first network device obtains the information about the second network device from the terminal device, and obtains the first policy from the first core network device.

Method a3: The first network device obtains the information about the second network device and the first policy from the terminal device.

In an example, the information about the second network device may include at least one of the following: an identifier of the second network device, a network to which the second network device belongs, a RAT of the second network device, serving frequency band information or frequency information of the second network device, or the like.

For example, the network to which the second network device belongs may be represented as a PLMN ID, a standalone non-public network (standalone non-public network, SNPN), or the like. The RAT of the second network device may be NR, LTE, 6G, terrestrial network (terrestrial network, TN), non-terrestrial network (non-terrestrial network, NTN), or the like.

Optionally, when providing the first policy for the first network device, the first core network device may notify the first network device in an explicit manner (for example, Method a1 and Method a2) as described above, or may notify the first network device in an implicit manner. For example, a mobility restriction list (mobility restriction list, MRL) provided by an existing core network for the network device is reused. For example, in the MRL provided for the first network device, equivalent PLMN information includes only a PLMN ID or an NPN ID that can be paired with a PLMN to which the current second network device belongs and that meets a network type policy, and a RAT restriction includes all RATs that cannot be paired with a RAT currently corresponding to the second network device and that meet a base station type policy.

Step 402: The first network device determines, based on the information about the second network device and the first policy, whether a third network device exists, where the third network device is a target network device to which the terminal device can be handed over from the first network device.

In some embodiments, the first network device usually provides a measurement configuration for the terminal device. The terminal device performs measurement based on the measurement configuration, reports a measurement result to the first network device when a measurement reporting condition is met, to report information that is currently obtained through measurement and that is about a cell that meets the condition. To cause the terminal device to report a measurement result that meets the policy, the foregoing measurement process may be implemented in the following implementations based on different cases of measurement configurations and/or measurement performed by the terminal device.

Implementation b1: The first network device sends a first measurement configuration to the terminal device based on the information about the second network device and the first policy; and the first terminal device performs measurement based on first measurement configuration information, and sends a measurement result to the first network device, where the measurement result meets the first policy.

For example, the first measurement configuration may include at least one of the following cases: In the first measurement configuration, a serving cell of the second network device may be assigned to the terminal device as an item in an excluded cell list (excluded cell list); the first measurement configuration may include only a measurement object (measurement object) corresponding to a network device type that meets the first policy; a network type is limited in the first measurement configuration, or the like.

In Implementation b1, because a limitation of the first policy has been considered in the first measurement configuration, the terminal device may perform measurement based on the first measurement configuration without performing additional determining, an additional operation, or the like.

Implementation b2: The first network device sends a second measurement configuration to the terminal device. The terminal device performs measurement based on the first policy, the information about the second network device, and the second measurement configuration, and sends a measurement result to the first network device, where the measurement result meets the first policy.

For example, based on the second measurement configuration and the information about the second network device, the terminal device finds that, according to a current mechanism, the terminal device still needs to measure a serving cell of the second network device, and report a measurement result of the serving cell of the second network device when a measurement reporting condition is met. In this case, the terminal device may determine, based on the first policy, not to measure the serving cell of the second network device or not to trigger measurement reporting.

For another example, based on the second measurement configuration, the terminal device finds that the terminal device needs to perform measurement or measurement reporting on a cell of a first network type or a first network device type, and the first network type or the first network device type and a network type or a network device type corresponding to the current second network device do not meet the first policy. In this case, the terminal device may skip performing measurement on such a cell or may skip triggering measurement reporting for such a cell.

Due to a limitation of the first network device on the measurement configuration in Implementation b1 or a behavior limitation of the terminal device in Implementation b2, information about a cell that meets the first policy is finally obtained through measurement by the terminal device. In other words, even if the terminal device can detect that cell quality meets a measurement event, the terminal device does not report the information about the cell to the first network device when a network attribute or a network device type corresponding to the cell does not meet the first policy.

In addition to the foregoing implementations, the first network device may not generate the first measurement configuration based on the first policy or the like, or the terminal device may not adjust a measurement behavior or a measurement reporting behavior based on the first policy or the like. In this case, the terminal device performs measurement reporting according to a current existing mechanism. To be specific, a measurement report may include information about a cell that meets the first policy, or may include information about a cell that does not meet the first policy. Therefore, the first network device needs to subsequently ensure that selection of a target cell meets the first policy.

In a possible implementation, the method in which the first network device determines, based on the information about the second network device and the first policy, whether the third network device exists may be as follows: The first network device determines, based on the information about the second network device, the first policy, and the measurement result, whether the third network device exists.

For example, the method in which the first network device determines, based on the information about the second network device, the first policy, and the measurement result, whether the third network device exists may be as follows: The first network device determines, based on the information about the second network device, whether the measurement result includes a measurement result of a network device that is different from the second network device and that meets the first policy with the second network device; and if the measurement result includes the measurement result of the network device, the first network device determines that the third network device exists; or if the measurement result does not include the measurement result of the network device, the first network device determines the third network device does not exist.

For example, when the first network device determines, based on the information about the second network device, whether the measurement result includes the measurement result of the network device that is different from the second network device and that meets the first policy with the second network device, the first network device may determine whether a combination of a network type and/or a network device type corresponding to a cell in the measurement result, and a network type and/or a network device type of the second network device meets the first policy.

In some embodiments, when determining that the third network device exists, the first network device determines, as the third network device, one network device in the corresponding network devices which is different from the second network device and meets the first policy with the second network device and whose measurement result is in the measurement result. It may also be understood as that the first network device selects, from information that is about a cell and that is included in the measurement result, an appropriate target cell as a cell of the third network device, to initiate handover for the terminal device. In other words, the first network device selects a target cell that meets the first policy, to further initiate a handover procedure.

In some other embodiments, when the first network device determines that the third network device does not exist, when determining that quality of a serving cell of the first network device is less than a first threshold, the first network device releases a connection between the first network device and the terminal device, or suspends or pauses data communication of the terminal device; or the first network device determines that the terminal device can be handed over to a fourth network device, and the first network device stops or suspends data communication of the terminal device.

Optionally, the terminal device may not trigger measurement reporting because the terminal device obtains no cell that meets the first policy, or none of cells in the measurement result reported by the terminal device meets the first policy. As a result, the first network device cannot determine the third network device.

That the first network device releases the connection between the first network device and the terminal device may also be understood as that the first network device releases service communication (data communication) between the first network device and the terminal device.

For example, when determining that the quality of the serving cell of the first network device is less than the first threshold, the first network device may send a radio resource control (radio resource control, RRC) release message to the terminal device, to indicate the terminal device to enter an idle (idle) state or an inactive (inactive) state.

In an example, when suspending or pausing data communication of the terminal device, the first network device may concurrently indicate, to the first core network device, that the first network device suspends or pauses data communication of the terminal device. Optionally, the first network device may further indicate, to the first core network device, a reason for suspending or pausing data communication of the terminal device. For example, the reason may be that a network is unavailable.

Optionally, the fourth network device may be a network device that is selected by the first network device without consideration of a limitation of the first policy and whose signal quality can meet a handover condition. In this case, the first network device does not hand over a current service to the fourth network device. For example, the first network device does not include data radio bearer (data radio bearer, DRB) information in a handover command sent to the fourth network device. Alternatively, the first network device includes the DRB information in the handover command sent to the fourth network device, and additionally includes indication information indicating to release or suspend communication of a DRB, so that the fourth network device indicates, in a configuration sent to the terminal device, to release or suspend the DRB, and indicates, in a path handover request message sent by a core network, to release or suspend a protocol data unit (protocol data unit, PDU) session corresponding to the DRB.

It should be understood that, in this embodiment, only handover of the first network device is used as an example for description. In practice, the second network device may also perform handover. A handover procedure of the second network device is similar to that of the first network device. For example, a process in which the second network device obtains information about the first network device, the first policy, and the like and a subsequent handover decision process is similar to those of the first network device. For details, refer to each other. The details are not described herein.

In some embodiments, a primary network connection and a secondary network connection may be distinguished for two networks connected to the terminal device, and a network connection may include a connection from the terminal device to the core network via a network device. Based on this assumption, a handover limitation may be applied only to a network device on the secondary network connection, or the handover limitation is applicable to both network devices. However, when no appropriate target cell or target network device is found, only a network device on the secondary network connection performs an operation of releasing or suspending a connection to the terminal device or service communication of the terminal device. Optionally, a network device may learn, based on indication information obtained from the core network or the terminal device, that the network device belongs to the secondary network connection.

Based on the foregoing communication method, the first network device senses information about another network device and the first policy, so that the first network device can select an appropriate target network device during handover decision, to ensure that the network device after the handover meets a core network data dual-flow communication requirement.

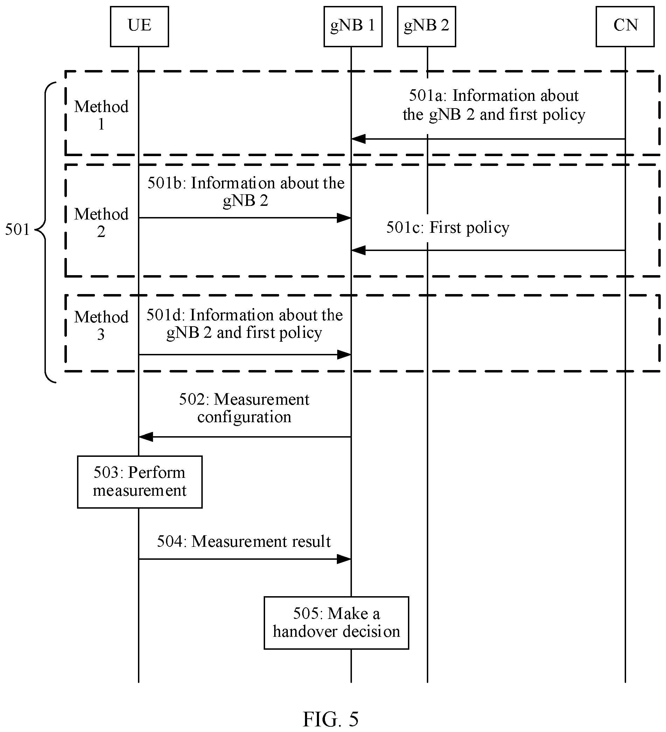

Based on the embodiment shown in FIG. 4, the following describes, by using an example of a communication method shown in FIG. 5, the communication method provided in embodiments of this application. In the example shown in FIG. 5, an example in which the first network device and the second network device are respectively a gNB 1 and a gNB 2, the terminal device is UE, and the first core network device is a core network (core network, CN) device is used for description. When the UE moves, the gNB 1 and the gNB 2 separately make a handover decision for the UE. To ensure that, after any network device makes a handover decision, a selected target network device can still support providing a core network service data dual-flow communication service for the UE. This is implemented by using a procedure shown in FIG. 5. In the example shown in FIG. 5, only gNB 1 handover is used as an example for description. It should be understood that the same applies to the gNB 2. Details are not described.

For example, an example of the communication method shown in FIG. 5 may include the following steps.

Step 501: The gNB 1 obtains information about the gNB 2 and a first policy.

Optionally, step 501 may be implemented by using three methods shown in FIG. 5, and the methods specifically include the following.

Method 1: Step 501a: The gNB 1 receives the information about the gNB 2 and the first policy from a CN.

Method 2: Step 501b: The gNB 1 receives the information about the gNB 2 from the UE; and step 501c: The gNB 1 receives the first policy from the CN.

It should be understood that, in Method 2, a sequence of step 501b and step 501c is not limited.

Method 3: Step 501d: The gNB 1 receives the information about the gNB 2 and the first policy from the UE.

For related descriptions of the information about the gNB 2 and the first policy, refer to the related descriptions in the embodiment shown in FIG. 4. Details are not described herein again.

Step 502: The gNB 1 sends a measurement configuration to the UE.

The measurement configuration may be the first measurement configuration or the second measurement configuration in the embodiment shown in FIG. 4. For details, refer to the foregoing descriptions. The details are not described herein again.

Step 503: The UE performs measurement.

Specifically, for related descriptions of UE measurement, refer to the related descriptions in the embodiment shown in FIG. 4. Details are not described herein again.

Step 504: The UE sends a measurement result to the gNB 1.

Specifically, for the measurement result, refer to the related descriptions in the embodiment shown in FIG. 4. Details are not described herein again.

Step 505: The gNB 1 makes a handover decision.

When making a handover decision, the gNB 1 may determine whether a target network device (that is, the foregoing third network device) that can be for handover exists. For details, refer to the related descriptions in the embodiment shown in FIG. 4. Details are not described herein again.

Based on the foregoing example, a network device senses information about another network device and the first policy, so that the network device can select an appropriate target network device during handover decision, to ensure that the network device after the handover meets a core network data dual-flow communication requirement.

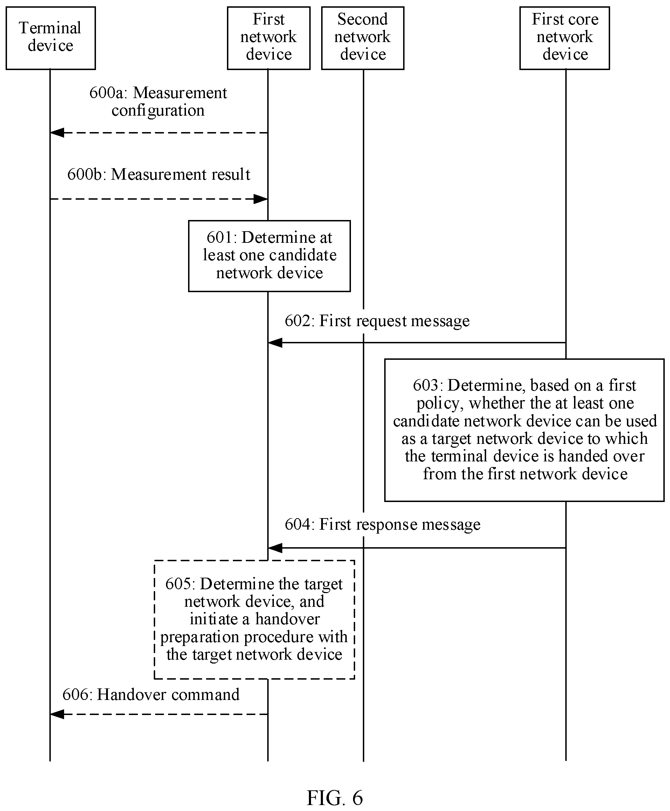

In the embodiment shown in FIG. 4 or FIG. 5, a network device may sense information about another network device and a policy, to assist the network device in providing an appropriate configuration and selecting a target cell that meets the policy. An embodiment of this application provides another communication method in which a network device may perform verification with a core network in advance before initiating a handover preparation procedure. For example, for another communication method provided in this embodiment of this application, refer to FIG. 6. A procedure of the method may include the following steps.

Step 601: A first network device determines at least one candidate network device.

In an optional implementation, before determining the at least one candidate network device, the first network device performs step 600a: The first network device sends a measurement configuration to a terminal device, and step 600b: The first network device receives a measurement result from the terminal device.

Further, the first network device determines the at least one candidate network device based on the measurement result. It may also be understood as that the first network device selects at least one candidate cell based on the measurement result, where each candidate cell corresponds to one candidate network device.

In some embodiments, because the terminal device may learn a first policy and information about the first network device and a second network device that provide a data communication service for the terminal device, the terminal device may determine the measurement result based on the information about the first network device, the information about the second network device, and the first policy. For example, the terminal device may determine, based on the information about the first network device, the information about the second network device, and the first policy, whether to measure a cell, or determine whether to trigger measurement reporting for a cell. For details, refer to the related descriptions of the terminal device in Implementation b2. The details are not described herein again.

For related descriptions of the first policy, refer to the descriptions of the first policy in the embodiment shown in FIG. 4. Details are not described herein again.

Step 602: The first network device sends a first request message to a first core network device. Correspondingly, the first core network device receives the first request message from the first network device. The first request message is for requesting the first core network device to determine whether the at least one candidate network device can be used as a target network device to which the terminal device can be handed over from the first network device. The target network device and the second network device can provide a data communication service for the terminal device.

In an optional implementation c1, the first request message may include information about the at least one candidate network device.

In an optional implementation c2, the first request message may include information about a first candidate network device, and the first candidate network device is any one of the at least one candidate network device.

Optionally, if the method in Implementation c2 is used, the first network device may send at least one first request message to the first core network, where each first request message includes information about one candidate network device.

Step 603: The first core network device determines, based on the first policy, whether the at least one candidate network device can be used as the target network device to which the terminal device can be/is capable of being handed over from the first network device.

For example, the first core network device determines that a candidate network device is not the second network device, and a network type and a network device type of the candidate network device meet the first policy. In this case, the first core network device may determine that the candidate network device can be used as the target network device to which the terminal device can be handed over from the first network device. Otherwise, the candidate network device cannot be used as the target network device to which the terminal device can be handed over from the first network device.

Step 604: The first core network device sends a first response message to the first network device. Correspondingly, the first network device receives the first response message from the first core network device. The first response message indicates whether the at least one candidate network device can be used as the target network device to which the terminal device can be handed over from the first network device.

Corresponding to the foregoing implementation c1, the first response message may include information about a candidate network device that can be used as the target network device and that is in the at least one candidate network device; or the first response message may include indication information indicating whether the at least one candidate network device can be used as the target network device.

Alternatively, the first response message may include information about a corresponding candidate cell of a candidate network device that can be used as the target network device and that is in the at least one candidate network device.

For example, the information about the candidate cell may include a cell identifier, an identifier of a network device to which the cell belongs, information about a network to which the cell belongs (for example, a PLMN ID or an NPN ID), or a type of a network device to which the cell belongs. The information about the candidate network device may include an identifier of the network device, information about a network to which the network device belongs, or a network device type of the network device.

Corresponding to the implementation c2, the first response message may include indication information indicating whether the first candidate network device can be used as the target network device. For example, the first response message may include indication information indicating meeting or not meeting.

Correspondingly, if the first network device sends at least one first request message to the first core network device, the first core network device may return at least one corresponding first response message to the first network device.

In some embodiments, when determining, based on the first response message, that the candidate network device that can be used as the target network device to which the terminal device can be handed over from the first network device exists, the first network device may further perform the following steps. Step 605: The first network device determines the target network device, and initiates a handover preparation procedure with the target network device. Step 606: The first network device sends a handover command to the terminal device, to indicate to hand over the terminal device to the target network device.

In some other embodiments, when none of the at least one candidate network device can be used as the target network device to which the terminal device can be handed over from the first network device, when determining that quality of a serving cell of the first network device is less than a first threshold, the first network device releases a connection between the first network device and the terminal device, or suspends data communication of the terminal device; or the first network device determines that the terminal device can be handed over to a third network device, and the first network device stops or suspends data communication of the terminal device.

For example, when none of the at least one candidate network device can be used as the target network device to which the terminal device can be handed over from the first network device, which may also be understood as that the first network device does not find an appropriate target network device. In this case, for a specific operation of the first network device, refer to the related operation in the embodiment shown in FIG. 4 in which the first network device determines that the third network device does not exist. Details are not described herein again. It should be noted that, the embodiment shown in FIG. 6 in which the first network device determines that the terminal device can be handed over to the third network device is similar to the embodiment shown in FIG. 4 in which the first network device determines that the terminal device can be handed over to the fourth network device. Mutual reference may be made.

It should be noted that the foregoing procedure is described by using the first network device as an example, and does not limit a behavior of the second network device. It should be understood that the second network device may perform a same operation as the first network device, and the first network device and the second network device may perform the same operation in parallel. This is not limited in this application.

Optionally, before sending the first request information to the first core network device, the first network device may receive first indication information from the terminal device or the first core network device. The first indication information may indicate that when serving the current terminal device, the first network device needs to perform the foregoing operation of querying the target network device with the core network. The same applies to the second network device and the like.

Optionally, a primary network connection and a secondary network connection may be distinguished for two networks connected to the terminal device. It may be limited that only a network device on the secondary network connection needs to perform a query process with the core network. Alternatively, both network devices need to interact with the core network, but only a network device on the secondary network connection needs to release or suspend an RRC connection to the terminal device or service data communication of the terminal device when no appropriate target cell or target network device is found.

Based on the foregoing communication method, the first network device queries a core network in advance to select a target cell or a target network device that meets the first policy, to ensure that the terminal device can maintain service dual-flow communication during movement.

It should be understood that in the descriptions of the foregoing embodiment, only the target network device and the like are used as an example for description. The target network device and the like may alternatively be implemented by using a target cell. This is not limited in this application.

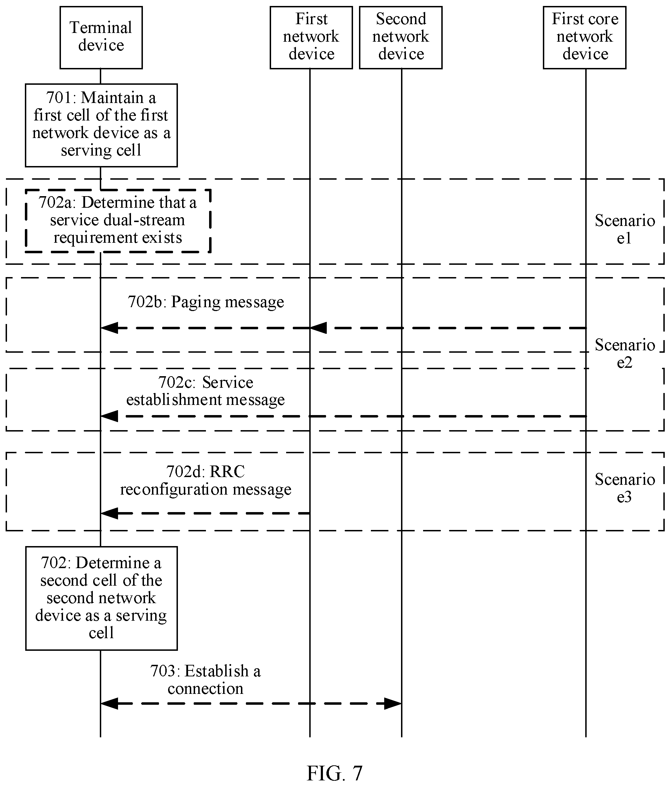

In the foregoing embodiments, mobility of the terminal device in a connected mode, that is, a handover scenario, is considered. In addition to the foregoing embodiments, an embodiment of this application further provides another communication method in which mobility of a terminal device in an idle or inactive state, that is, a cell selection or reselection behavior of the terminal device, may be considered. For example, when selecting a second serving cell to camp on, the terminal device needs to consider information about a first serving cell and policy information. For example, for the another communication method provided in this embodiment of this application, refer to FIG. 7. A procedure of the method may include the following steps.

Step 701: A terminal device maintains a first cell of a first network device as a serving cell.

In an optional implementation, that the terminal device maintains the first cell of the first network device as the serving cell may include the following two cases.

Case d1: The terminal device camps on the first cell.

In Case d1, the terminal device may be in an idle or inactive state.

Case d2: The terminal device communicates with the first cell.

In Case d2, the terminal device may be connected to the first cell in a connected state.

Step 702: The terminal device determines a second cell of a second network device as a serving cell. The first network device and the second network device can provide a data communication service for the terminal device, and the first network device and the second network device meet the first policy.

In some embodiments, the terminal device may determine the second cell of the second network device as the serving cell only when the terminal device is to initiate service dual-flow communication. Optionally, initiating the service dual-flow communication may also be understood as initiating a dual-flow communication service. In a possible case, a service already exists, and dual-flow communication is triggered only when a preset condition is met. In another possible case, a service is currently initiated, and a dual-flow communication operation needs to be performed when the service is initiated. The service dual-flow communication may be initiated by the terminal device, or may be initiated by a server or a network. This is not limited in this application.

For example, before the terminal device determines the second cell of the second network device as the serving cell, the following three scenarios may trigger determining, by the terminal device, the second cell of the second network device as the serving cell.

Scenario e1: The terminal device determines that a service dual-flow communication requirement exists, optionally, as shown in step 702a in FIG. 7.

In Scenario e1, the terminal device in an idle or inactive state may initiate, in the first cell, an RRC connection establishment procedure or an RRC connection reestablishment procedure to enter a connected state. Further, a DRB is established for a service, and service data communication is performed.

Alternatively, the terminal device in a connected state establishes a connection to the first cell and performs data service communication.

Scenario e2: The terminal device receives a first message from a first core network device, where the first message indicates the terminal device to determine the second cell of the second network device as the serving cell.

In an example, the first message may be a paging message. In this case, when a new service arrives and the service requires a dual-flow communication operation, the first core network device initiates paging.

When the first message is a paging message, the first core network device sends the paging message to the terminal device via the first network device, as shown in step 702b in FIG. 7.

In another example, the first message may be a service establishment message, as shown in step 702c in FIG. 7. Optionally, the service establishment message may be NAS signaling. In this case, when a new service arrives and the service requires a dual-flow communication operation, the first core network device performs NAS signaling exchange with the terminal device for the new service. Alternatively, after the service has been established, the first core network device indicates, by using the service establishment message, the terminal device to perform a dual-flow communication operation.

Scenario e3: The terminal device receives a second message from the first network device, where the second message indicates the terminal device to perform service dual-flow communication.

Optionally, the second message may be an RRC reconfiguration message, as shown in step 702d in FIG. 7.

In some embodiments, after a service has been established, the first network device indicates, by using the RRC reconfiguration message, the terminal device to perform a dual-flow communication operation.

In an optional implementation, when the terminal device determines the second cell of the second network device as the serving cell, the second cell needs to meet a preset condition. For example, a measurement result of the second cell needs to meet a cell camping condition. In addition, the second cell and the first cell need to belong to different network devices, a combination of a network to which the second cell belongs and a network to which the first cell belongs meets the first policy, and a type of a network device to which the second cell belongs and a type of a network device to which the first cell belongs meet the first policy.

For related descriptions of the first policy, refer to the descriptions of the first policy in the embodiment shown in FIG. 4. Details are not described herein again.

Further, optionally, frequencies of the second cell and the first cell are different; or the frequencies of the second cell and the first cell need to meet the first policy; or a combination of frequency bands to which the frequencies of the second cell and the first cell belong is supported by a capability of the terminal device.

In an optional implementation, after determining the second cell of the second network device as the serving cell, the terminal device may perform step 703: The terminal device establishes a connection to the second network device, in other words, the terminal device establishes a connection to the second cell of the second network device.

For example, after determining the second cell of the second network device as the serving cell, the terminal device enters a connected state, establishes a DRB for a service, and performs data communication.

In some examples, when determining the second cell of the second network device as the serving cell, the terminal device may find no second cell that meets the condition. In this case, the terminal device does not perform a service dual-flow communication operation. Optionally, the terminal device may further notify a network. For example, the terminal device may notify, by using a NAS message, a core network that no appropriate second cell is found, or notify, by using an RRC message, a current serving network that no appropriate second cell is found.

In some other embodiments, even if there is no service splitting requirement, the terminal device may select a second cell for camping on. To be specific, the terminal device determines the second cell of the second network device as the serving cell, and prepares to perform service splitting communication at any time. This can reduce latency for initiating service data communication by the terminal device on the connection to the second cell. In this case, the terminal device always has two serving cells: the first cell and the second cell. When there is no service splitting, the terminal device may remain in an idle or inactive state in the second cell, and a state of the terminal device in the first cell is not limited. Optionally, after started, the terminal device may select the first cell and the second cell.

In this case, a method for selecting the second cell by the terminal device is the same as that described above. Details are not described herein again.

Optionally, the first cell may correspond to a primary network connection, and the second cell may correspond to a secondary network connection. This is not limited in this application.

Further, when a dual-flow communication service is completed, or when a dual-flow communication operation no longer needs to be performed for a service, the terminal device or a network (the core network or the second network device) may release the second cell initially selected by the terminal device, or release a cell different from the initially selected second cell. Optionally, if the second cell is a cell on the secondary network connection, that the terminal device releases the second cell when communication of the dual-flow communication service is completed or when the service no longer needs a dual-flow communication operation may be understood as that the terminal device may release the secondary network connection when communication of the dual-flow communication service is completed or when the service no longer needs a dual-flow communication operation.

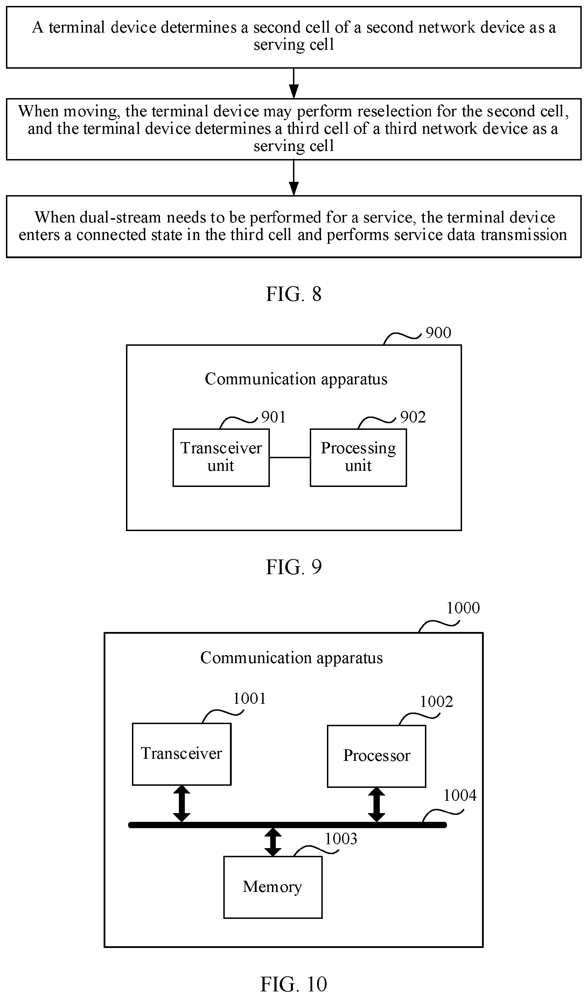

After the terminal device determines the second cell of the second network device as the serving cell, as shown in FIG. 8, when moving, the terminal device may perform reselection for the second cell, and the terminal device determines a third cell of a third network device as a serving cell. The first network device and the third network device meet the first policy. Subsequently, when dual-flow communication needs to be performed for a service, the terminal device enters a connected state in the third cell and performs service data communication, to implement service dual-flow communication.

For example, the terminal device may determine the third cell of the third network device as the serving cell by using the following method. The terminal device determines, in cells of at least one network device that meets the first policy with the first network device, that the third cell of the third network device is a cell with highest cell quality; or the terminal device determines, in cells whose cell quality meets a condition, that the third cell of the third network device is a cell that has highest cell quality in the cells that meet the condition and that belongs to a network device that meets the first policy with the first network device.

Optionally, when reselecting a cell, the terminal device may find no appropriate cell, in other words, the third cell does not exist. In this case, the terminal device may perform the following operations.

Operation f1: The terminal device falls back to a current mechanism, and selects a cell whose cell quality meets the condition and that is ranked first for camping on. However, when there is a service dual-flow communication requirement, the terminal device cannot enter a connected state in the cell to perform service data communication.

Operation f2: The terminal device does not trigger cell reselection, and maintains, until the second cell no longer meets a camping condition, camping on the second cell that originally meets the policy. Then, the terminal device may re-initiate a cell selection process.

Based on the foregoing communication method, the terminal device may select a second cell that meets a dual-flow communication requirement, to ensure that a service data dual-flow communication requirement is met.

Based on the foregoing embodiments, an embodiment of this application further provides a communication apparatus. Refer to FIG. 9. The communication apparatus 900 may include a transceiver unit 901 and a processing unit 902. The transceiver unit 901 is used by the communication apparatus 900 for communication, for example, receiving information (a message or data) or sending information (a message or data), and the processing unit 902 is configured to control and manage an action of the communication apparatus 900. The processing unit 902 may further control a step performed by the transceiver unit 901.

For example, the communication apparatus 900 may be specifically the first network device, or a processor, a chip, a chip system, a functional module, or the like in the first network device in the foregoing embodiments. Alternatively, the communication apparatus 900 may be specifically the first core network device, or a processor, a chip, a chip system, a functional module, or the like in the first core network device in the foregoing embodiments. Alternatively, the communication apparatus 900 may be specifically the terminal device, or a processor, a chip, a chip system, a functional module, or the like in the terminal device in the foregoing embodiments.

In an embodiment, when the communication apparatus 900 is configured to implement a function of the first network device (for example, the gNB 1) in the embodiment in FIG. 4 or FIG. 5, the transceiver unit 901 may be configured to perform communication. The processing unit 902 may be configured to: obtain information about a second network device and a first policy, where the first network device and the second network device provide a data communication service for a terminal device; and determine, based on the information about the second network device and the first policy, whether a third network device exists, where the third network device is a target network device to which the terminal device can be handed over from the first network device.

In an optional implementation, when obtaining the information about the second network device and the first policy, the processing unit 902 may be configured to: control the transceiver unit 901 to obtain the information about the second network device and the first policy from a first core network device; or control the transceiver unit 901 to obtain the information about the second network device from the terminal device and obtain the first policy from the first core network device; or control the transceiver unit 901 to obtain the information about the second network device and the first policy from the terminal device.

In an example, the processing unit 902 may be further configured to control, based on the information about the second network device and the first policy, the transceiver unit 901 to send a first measurement configuration to the terminal device. The transceiver unit 901 may be further configured to receive a measurement result from the terminal device, where the measurement result meets the first policy.

In another example, the transceiver unit 901 may be further configured to: send a second measurement configuration to the terminal device; and receive a measurement result from the terminal device, where the measurement result meets the first policy, and the measurement result is determined by the terminal device based on the information about the second network device and the first policy.

Optionally, when determining, based on the information about the second network device and the first policy, whether the third network device exists, the processing unit 902 is configured to determine, based on the information about the second network device, the first policy, and the measurement result, whether the third network device exists.

For example, when determining, based on the information about the second network device, the first policy, and the measurement result, whether the third network device exists, the processing unit 902 may be configured to: determine, based on the information about the second network device, whether the measurement result includes a measurement result of a network device that is different from the second network device and that meets the first policy with the second network device; and if the measurement result includes the measurement result of the network device, determine that the third network device exists; or if the measurement result does not include the measurement result of the network device, determine that the third network device does not exist.

In a possible implementation, when determining that the third network device exists, the processing unit 902 may be further configured to: determine, as the third network device, one network devices in the corresponding network device that is different from the second network device and meets the first policy with the second network device and whose measurement result is in the measurement result.

In another possible implementation, when determining that the third network device does not exist, the processing unit 902 may be further configured to: when determining that quality of a serving cell of the first network device is less than a first threshold, release a connection between the first network device and the terminal device, or suspend data communication of the terminal device; or determine that the terminal device can be handed over to a fourth network device, where the first network device stops or suspends data communication of the terminal device.

For example, the first policy may include at least one of the following: two network devices that provide a data communication service for the terminal device being different, a combination of networks to which network devices allowed to perform a dual-flow communication operation belong, a combination of radio access technologies RATs of network devices allowed to perform a dual-flow communication operation, or a combination of operating frequency bands or frequencies of network devices allowed to perform a dual-flow communication operation.

Optionally, the information about the second network device may include at least one of the following: an identifier of the second network device, a network to which the second network device belongs, a radio access technology RAT of the second network device, or serving frequency band information or frequency information of the second network device.

In another embodiment, when the communication apparatus 900 is configured to implement a function of the first network device in the embodiment in FIG. 6, the processing unit 902 may be configured to determine at least one candidate network device. The transceiver unit 901 may be configured to send a first request message to the first core network device, where the first request message is for requesting the first core network device to determine whether the at least one candidate network device can be used as a target network device to which the terminal device can be handed over from the first network device. The first network device and the second network device provide a data communication service for the terminal device, and the target network device and the second network device can provide a data communication service for the terminal device. In addition, the transceiver unit 901 may be configured to receive a first response message from the first core network device, where the first response message indicates whether the at least one candidate network device can be used as the target network device to which the terminal device can be handed over from the first network device.

In an optional implementation, when determining the at least one candidate network device, the processing unit 902 may be configured to: control the transceiver unit 901 to send a measurement configuration to the terminal device; receive a measurement result from the terminal device; and determine the at least one candidate network device based on the measurement result.

The measurement result may be determined based on information about the first network device, the information about the second network device, and the first policy.

For example, the first policy may include at least one of the following: two network devices that provide a data communication service for the terminal device being different, a combination of networks to which network devices allowed to perform a dual-flow communication operation belong, a combination of radio access technologies RATs of network devices allowed to perform a dual-flow communication operation, or a combination of operating frequency bands or frequencies of network devices allowed to perform a dual-flow communication operation.

In an example, the first request message includes information about the at least one candidate network device. The first response message includes information about a candidate network device that can be used as the target network device in the at least one candidate network device. Alternatively, the first response message includes indication information indicating whether the at least one candidate network device can be used as the target network device.

In another example, the first request message includes information about a first candidate network device, the first response message includes indication information indicating whether the first candidate network device can be used as the target network device, and the first candidate network device is any one of the at least one candidate network device.

Optionally, when none of the at least one candidate network device can be used as the target network device to which the terminal device can be handed over from the first network device, the processing unit 902 may be further configured to: when determining that quality of a serving cell of the first network device is less than a first threshold, release a connection between the first network device and the terminal device, or suspend data communication of the terminal device; or determine that the terminal device can be handed over to a third network device, where the first network device stops or suspends data communication of the terminal device.

In still another embodiment, when the communication apparatus 900 is configured to implement a function of the first core network device in the embodiment in FIG. 6, the transceiver unit 901 may be configured to receive a first request message from the first network device, where the first request message is for requesting the first core network device to determine whether at least one candidate network device can be used as the target network device to which the terminal device can be handed over from the first network device. The first network device and the second network device provide a data communication service for the terminal device, and the target network device and the second network device provide a data communication service for the terminal device. The processing unit 902 may be configured to determine, based on the first policy, whether the at least one candidate network device can be used as the target network device to which the terminal device can be handed over from the first network device. The transceiver unit 901 may be further configured to send a first response message to the first network device, where the first response message indicates whether the at least one candidate network device can be used as the target network device to which the terminal device is handed over from the first network device.

The first policy may include at least one of the following: two network devices that provide a data communication service for the terminal device being different, a combination of networks to which network devices allowed to perform a dual-flow communication operation belong, a combination of radio access technologies RATs of network devices allowed to perform a dual-flow communication operation, or a combination of operating frequency bands or frequencies of network devices allowed to perform a dual-flow communication operation.

In an example, the first request message includes information about the at least one candidate network device. The first response message includes information about a candidate network device that can be used as the target network device in the at least one candidate network device. Alternatively, the first response message includes indication information indicating whether the at least one candidate network device can be used as the target network device.

In another example, the first request message includes information about a first candidate network device, the first response message includes indication information indicating whether the first candidate network device can be used as the target network device, and the first candidate network device is any one of the at least one candidate network device.

In still another embodiment, when the communication apparatus 900 is configured to implement a function of the terminal device in the embodiment in FIG. 7 or FIG. 8, the processing unit 902 may be configured to: maintain a first cell of the first network device as a serving cell; and determine a second cell of the second network device as a serving cell, where the first network device and the second network device can provide a data communication service for the terminal device, and the first network device and the second network device meet the first policy.

In an optional implementation, when maintaining the first cell of the first network device as the serving cell, the processing unit 902 may be configured to: camp on the first cell; or control the transceiver unit 901 to communicate with the first cell.

Optionally, before determining the second cell of the second network device as the serving cell, the processing unit 902 may be further configured to: determine that a service dual-flow communication requirement exists; or control the transceiver unit 901 to receive a first message from the first core network device, where the first message indicates the terminal device to determine the second cell of the second network device as the serving cell; or control the transceiver unit 901 to receive a second message from the first network device, where the second message indicates the terminal device to perform service dual-flow communication.

For example, the first message may be a paging message or a service establishment message.

In a possible implementation, when the terminal device moves, the processing unit 902 may be further configured to: determine a third cell of a third network device as a serving cell. The third cell is a cell reselected for the second cell. The first network device and the third network device can provide a data communication service for the terminal device, and the first network device and the third network device meet the first policy.

In some embodiments, when determining the third cell of the third network device as the serving cell, the processing unit 902 may be configured to: determine, in cells of at least one network device that meets the first policy with the first network device, that the third cell of the third network device is a cell with highest cell quality; or determine, in cells whose cell quality meets a condition, that the third cell of the third network device is a cell that has highest cell quality in the cells that meet the condition and that belongs to a network device that meets the first policy with the first network device.

For example, the first policy may include at least one of the following: two network devices that provide a data communication service for the terminal device being different, a combination of networks to which network devices allowed to perform a dual-flow communication operation belong, a combination of radio access technologies RATs of network devices allowed to perform a dual-flow communication operation, or a combination of operating frequency bands or frequencies of network devices allowed to perform a dual-flow communication operation.

It should be noted that, in this embodiment of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or a part of the technical solutions may be implemented in the form of a software product. A computer software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 10. The communication apparatus 1000 may include a processor 1002. Optionally, the communication apparatus 1000 may further include a transceiver 1001. Optionally, the communication apparatus 1000 may further include a memory 1003. The memory 1003 may be disposed inside the communication apparatus 1000, or may be disposed outside the communication apparatus 1000. The processor 1002 may control the transceiver 1001 to send and receive information, a message, data, or the like.

Specifically, the processor 1002 may be a central processing unit (central processing unit, CPU), a network processor (network processor, NP), or a combination of a CPU and an NP. The processor 1002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The transceiver 1001, the processor 1002, and the memory 1003 are connected to each other. Optionally, the transceiver 1001, the processor 1002, and the memory 1003 are connected to each other through a bus 1004. The bus 1004 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

In an optional implementation, the memory 1003 is configured to store a program and the like. Specifically, the program may include program code, and the program code includes computer operation instructions. The memory 1003 may include a RAM, and may further include a non-volatile memory (non-volatile memory), for example, one or more disk memories. The processor 1002 executes an application program stored in the memory 1003, to implement the foregoing function, thereby implementing a function of the communication apparatus 1000.

For example, the communication apparatus 1000 may be the first network device in the foregoing embodiment, the first core network device in the foregoing embodiment, or the terminal device in the foregoing embodiment.

In an embodiment, when the communication apparatus 1000 implements a function of the first network device in the embodiment shown in FIG. 4, FIG. 5, or FIG. 6, the transceiver 1001 may implement sending and receiving operations performed by the first network device in the embodiment shown in FIG. 4, FIG. 5, or FIG. 6; and the processor 1002 may implement an operation other than the sending and receiving operations performed by the first network device in the embodiment shown in FIG. 4, FIG. 5, or FIG. 6. Specifically, for related detailed descriptions, refer to the related descriptions in the embodiment shown in FIG. 4, FIG. 5, or FIG. 6. Details are not described herein again.

In another embodiment, when the communication apparatus 1000 implements a function of the first core network device in the embodiment shown in FIG. 6, the transceiver 1001 may implement sending and receiving operations performed by the first core network device in the embodiment shown in FIG. 6; and the processor 1002 may implement an operation other than the sending and receiving operations performed by the first core network device in the embodiment shown in FIG. 6. Specifically, for related detailed descriptions, refer to the related descriptions in the embodiment shown in FIG. 6. Details are not described herein again.

In still another embodiment, when the communication apparatus 1000 implements a function of the terminal device in the embodiment shown in FIG. 7 or FIG. 8, the transceiver 1001 may implement sending and receiving operations performed by the terminal device in the embodiment shown in FIG. 7 or FIG. 8, and the processor 1002 may implement an operation other than the sending and receiving operations performed by the terminal device in the embodiment shown in FIG. 7 or FIG. 8. Specifically, for related detailed descriptions, refer to the related descriptions in the embodiment shown in FIG. 7 or FIG. 8. Details are not described herein again.

Based on the foregoing embodiments, an embodiment of this application provides a communication system. The communication system may include the first network device, the second network device, the first core network device, the terminal device, and the like in the foregoing embodiments.

An embodiment of this application further provides a computer-readable storage medium. The computer-readable storage medium is configured to store a computer program. When the computer program is executed by a computer, the computer may implement the communication method provided in the foregoing method embodiments.

An embodiment of this application further provides a computer program product. The computer program product is configured to store a computer program. When the computer program is executed by a computer, the computer may implement the communication method provided in the foregoing method embodiments.

An embodiment of this application further provides a chip, including a processor. The processor is coupled to a memory, and is configured to invoke a program in the memory, to cause the chip to implement the communication method provided in the foregoing method embodiments.

An embodiment of this application further provides a chip. The chip is coupled to a memory, and the chip is configured to implement the communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this case, this application is intended to cover these modifications and variations of this application provided that such modifications and variations fall within the scope of protection defined by the following claims and their equivalent technologies.

## Claims

1. A communication method, comprising:
obtaining, by a first network device, information about a second network device and a first policy, wherein the first network device and the second network device provide a data communication service for a terminal device; and
determining, by the first network device based on the information about the second network device and the first policy, whether a third network device exists, wherein the third network device is a target network device to which the terminal device can be handed over from the first network device.

2. The method according to claim 1, wherein the obtaining, by the first network device, the information about the second network device and the first policy comprises:
obtaining, by the first network device, the information about the second network device and the first policy from a first core network device; or
obtaining, by the first network device, the information about the second network device from the terminal device, and obtaining the first policy from the first core network device; or
obtaining, by the first network device, the information about the second network device and the first policy from the terminal device.

3. The method according to claim 1 or 2, wherein the method further comprises:
sending, by the first network device, a first measurement configuration to the terminal device based on the information about the second network device and the first policy; and
receiving, by the first network device, a measurement result from the terminal device, wherein the measurement result meets the first policy.

4. The method according to claim 1 or 2, wherein the method further comprises:
sending, by the first network device, a second measurement configuration to the terminal device; and
receiving, by the first network device, a measurement result from the terminal device, wherein the measurement result meets the first policy, and the measurement result is determined by the terminal device based on the information about the second network device and the first policy.

5. The method according to claim 3 or 4, wherein the determining, by the first network device based on the information about the second network device and the first policy, whether the third network device exists comprises:
determining, by the first network device based on the information about the second network device, the first policy, and the measurement result, whether the third network device exists.

6. The method according to claim 5, wherein the determining, by the first network device based on the information about the second network device, the first policy, and the measurement result, whether the third network device exists comprises:
determining, by the first network device based on the information about the second network device, whether the measurement result comprises a measurement result of a network device that is different from the second network device and that meets the first policy with the second network device; and
if the measurement result comprises the measurement result of the network device, determining, by the first network device, that the third network device exists; or
if the measurement result does not comprise the measurement result of the network device, determining, by the first network device, that the third network device does not exist.

7. The method according to claim 6, wherein when the first network device determines that the third network device exists, the method further comprises:
determining, by the first network device, one of the network devices corresponding to measurement results in the measurement result as the third network device, wherein the one network device is different from the second network device and meets the first policy together with the second network device.

8. The method according to any one of claims 1 to 6, wherein when the first network device determines that the third network device does not exist, the method further comprises:
when determining that quality of a serving cell of the first network device is less than a first threshold, by the first network device, releasing a connection between the first network device and the terminal device, or suspending data communication of the terminal device; or
determining, by the first network device, that the terminal device can be handed over to a fourth network device, and stopping or suspending, by the first network device, data communication of the terminal device.

9. The method according to any one of claims 1 to 8, wherein the first policy comprises at least one of the following: two network devices that provide a data communication service for the terminal device being different, a combination of networks to which network devices allowed to perform a dual-flow communication operation belong, a combination of radio access technologies RATs of network devices allowed to perform a dual-flow communication operation, or a combination of operating frequency bands or frequencies of network devices allowed to perform a dual-flow communication operation.

10. The method according to any one of claims 1 to 9, wherein the information about the second network device comprises at least one of the following: an identifier of the second network device, a network to which the second network device belongs, a radio access technology RAT of the second network device, or serving frequency band information or frequency information of the second network device.

11. A communication apparatus, comprising a module or a unit configured to perform the method according to any one of claims 1 to 10.

12. A communication apparatus, comprising a processor, wherein
the processor is coupled to a memory, and is configured to invoke computer instructions in the memory, to perform the method according to any one of claims 1 to 10.

13. The apparatus according to claim 12, further comprising the memory and/or a transceiver, wherein the memory is configured to store the computer instructions, and the transceiver is used by the communication apparatus to perform communication.

14. The apparatus according to claim 12 or 13, wherein the communication apparatus is a chip or a chip system.

15. A computer-readable storage medium, wherein the computer-readable storage medium stores computer-executable instructions, and when the computer-executable instructions are invoked by the computer, the method according to any one of claims 1 to 10 is performed.

16. A computer program product, comprising instructions, wherein when the instructions are run on a computer, the method according to any one of claims 1 to 10 is performed.

17. A chip, wherein the chip is coupled to a memory, and is configured to read and execute program instructions stored in the memory, to implement the method according to any one of claims 1 to 10.
